# EUROPEAN PATENT APPLICATION

(11) **EP 4 763 933 A1**
(43) Date of publication of application: **24.06.2026**
(21) Application number: 25216443.9
(22) Date of filing: 17.11.2025
(51) Int. Cl.: C09J 7/28, C09J 7/38, H01M 4/66, H01M 10/052

(54) **CURRENT COLLECTING FOIL WITH CONDUCTIVE ADHESIVE LAYER, ANODE CURRENT COLLECTOR, AND SECONDARY BATTERY**

(30) Priority: 17.12.2024 JP 2024220641
(71) Applicant: ZACROS Corporation, Tokyo 112-0002 (JP)
(72) Inventor: Suzuki, Takuma, Tokyo 112-0002 (JP); Sato, Ryuichi, Tokyo 112-0002 (JP)
(74) Representative: Godemeyer Blum Lenze Patentanwälte Partnerschaft mbB - werkpatent

(57) **Abstract**

There is provided a novel current collecting foil with conductive adhesive layer used for an anode-free battery. The current collecting foil with conductive adhesive layer includes a current collecting foil and a conductive adhesive layer, in which the conductive adhesive layer includes a matrix containing at least a polyisobutylene-based adhesive and a conductive material dispersed in the matrix, and contains 85 mass% or more and 95 mass% or less of the matrix and 5 mass% or more and 15 mass% or less of the conductive material with respect to the total mass of the conductive adhesive layer, the matrix contains the polyisobutylene-based adhesive, the polyisobutylene-based adhesive contains first polyisobutylene and second polyisobutylene, a weight average molecular weight of the first polyisobutylene is 30,000 or more and 200,000 or less, a weight average molecular weight of the second polyisobutylene is 500,000 or more and 5,000,000 or less, and 35 mass% or more and 85 mass% or less of the first polyisobutylene and 5 mass% or more and 60 mass% or less of the second polyisobutylene are contained with respect to the total mass of the conductive adhesive layer.

## Description

### TECHNICAL FIELD

The present invention relates to a current collecting foil with conductive adhesive layer, an anode current collector, and a secondary battery.

### BACKGROUND ART

In recent years, the importance of secondary batteries used as power sources has increased. Secondary batteries have been actively researched and developed from small batteries such as power supplies for portable electronic devices to medium and large batteries such as storage batteries for electric vehicles and households.

In general, a secondary battery has a pair of electrodes containing an active material and an electrolyte disposed between the electrodes. As the electrode, a configuration in which an active material layer containing a cathode active material or an anode active material and a current collector having excellent conductivity are laminated is known.

On the other hand, in recent years, a battery having a configuration referred to as an "anode-free battery" in which an anode active material layer is not present at the time of battery assembly has been studied (for example, Patent Document 1). In the anode-free battery, as compared with a general battery having an anode, the weight can be reduced by the absence of an anode active material layer such as graphite, and the gravimetric energy density can be improved. Furthermore, in the anode-free battery, the manufacturing cost can be reduced by eliminating the anode active material layer.

### PRIOR ART DOCUMENTS

### Patent Documents

Patent Document 1: Publication of Japanese translation of PCT international application No. 2022-542314

### SUMMARY OF THE INVENTION

### PROBLEM TO BE SOLVED BY THE INVENTION

The anode-free battery is different from a conventional secondary battery in the configuration on the anode (counter electrode of the cathode) side. Therefore, it is expected that the production can be more easily performed by using a new material, which has not been used in the study of the conventional secondary battery, for the anode side.

The present invention has been made in view of such circumstances, and an objective of the present invention is to provide a novel current collecting foil with conductive adhesive layer used for an anode-free battery. Another objective of the present invention is to provide a novel anode current collector made of such a current collecting foil with conductive adhesive layer, and a novel secondary battery having such an anode current collector.

### MEANS FOR SOLVING THE PROBLEM

In order to solve the above problems, the present invention includes the following aspects.
[1] A current collecting foil with conductive adhesive layer including: a current collecting foil; and a conductive adhesive layer provided on one surface of the current collecting foil, in which the conductive adhesive layer includes a matrix containing at least a polyisobutylene-based adhesive and a conductive material dispersed in the matrix, and contains 85 mass% or more and 95 mass% or less of the matrix and 5 mass% or more and 15 mass% or less of the conductive material with respect to the total mass of the conductive adhesive layer, the matrix contains the polyisobutylene-based adhesive, the polyisobutylene-based adhesive contains first polyisobutylene and second polyisobutylene, a weight average molecular weight of the first polyisobutylene is 30,000 or more and 200,000 or less, a weight average molecular weight of the second polyisobutylene is 500,000 or more and 5,000,000 or less, and 35 mass% or more and 85 mass% or less of the first polyisobutylene and 5 mass% or more and 60 mass% or less of the second polyisobutylene are contained with respect to the total mass of the conductive adhesive layer.
[2] The current collecting foil with conductive adhesive layer according to [1], in which the conductive adhesive layer has a thickness of 2 µm or more and 30 µm or less.
[3] The current collecting foil with conductive adhesive layer according to [1] or [2], in which the current collecting foil has a thickness of 4 µm or more and 15 µm or less.
[4] The current collecting foil with conductive adhesive layer according to any one of [1] to [3], in which the material of the current collecting foil is copper or nickel.
[5] The current collecting foil with conductive adhesive layer according to any one of [1] to [4], in which a release film is laminated on a surface of the conductive adhesive layer.
[6] An anode current collector made of the current collecting foil with conductive adhesive layer according to any one of [1] to [5].
[7] A secondary battery including: the anode current collector according to [6]; a cathode; and a separation layer sandwiched between the conductive adhesive layer of the anode current collector and the cathode, and attached to the conductive adhesive layer of the anode current collector, in which the separation layer is a separator or a solid electrolyte membrane.

### EFFECTS OF INVENTION

According to the present invention, it is possible to provide a novel current collecting foil with conductive adhesive layer used for an anode-free battery. Furthermore, it is possible to provide a novel anode current collector made of such a current collecting foil with conductive adhesive layer, and a novel secondary battery having such an anode current collector.

### BRIEF DESCRIPTION OF THE DRAWINGS

Fig. 1 is a schematic view illustrating a current collecting foil with conductive adhesive layer 10 according to the present embodiment.
Fig. 2 is a schematic view illustrating a secondary battery 100 of the present embodiment.

### BEST MODE FOR CARRYING OUT THE INVENTION

### [Current collecting foil with conductive adhesive layer, Anode current collector, and Secondary battery]

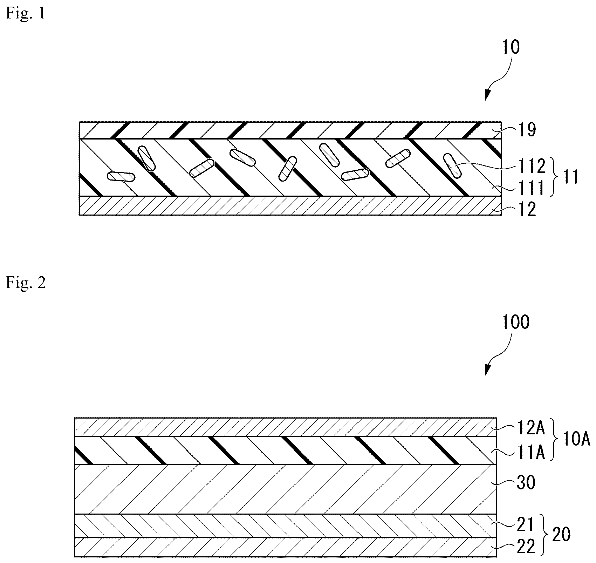

Fig. 1 is a schematic view illustrating a current collecting foil with conductive adhesive layer 10 according to the present embodiment. The current collecting foil with conductive adhesive layer 10 includes a conductive adhesive layer 11 and a current collecting foil 12. The conductive adhesive layer 11 is provided on one surface of the current collecting foil 12. An anode current collector manufactured from the current collecting foil with conductive adhesive layer 10 is used as the anode-side configuration of a lithium secondary battery.

The "current collecting foil with conductive adhesive layer" is a long molded body formed in a strip shape by laminating the conductive adhesive layer 11 and the current collecting foil 12, or a sheet-shaped molded body obtained by sheet processing such a strip-shaped molded body.

In the current collecting foil with conductive adhesive layer 10 illustrated in Fig. 1, a release film 19 is laminated on a surface of the conductive adhesive layer 11. As the release film 19, a conventional material such as a PET film subjected to release treatment with a silicone resin, a fluorine-containing silicone resin, or a non-silicone resin can be employed.

### <Conductive adhesive layer>

The conductive adhesive layer 11 does not require a solvent or heat when being attached to an object, and has a property of being attached to the object by applying pressure. The conductive adhesive layer 11 is a so-called pressure-sensitive adhesive layer. The conductive adhesive layer 11 includes a matrix 111 and a conductive material 112 dispersed in the matrix 111.

### (Matrix)

The matrix 111 includes at least a polyisobutylene-based adhesive as a material. The polyisobutylene-based adhesive is suitable as the material of the matrix 111 because it has little side reaction during the charge-discharge reaction and does not have a glass transition temperature within the normal operating temperature range of a secondary battery.

The polyisobutylene-based adhesive contains first polyisobutylene and second polyisobutylene having different molecular weights from each other. It is to be noted that third polyisobutylene may be further contained as long as the effect of the invention is not impaired.

In addition, each of the first polyisobutylene, the second polyisobutylene, and the third polyisobutylene may be one kind or two or more kinds. More specifically, one kind of first polyisobutylene and a plurality of kinds of second polyisobutylenes can also be used.

The weight average molecular weight of the first polyisobutylene is 30,000 or more and 200,000 or less, and may be 40,000 or more and 100,000 or less.

The weight average molecular weight of the second polyisobutylene is 500,000 or more and 5,000,000 or less, and may be 1,000,000 or more and 4,000,000 or less.

The weight average molecular weight is a value determined in terms of polystyrene by performing measurement by gel permeation chromatography (GPC). An example of the column used for measuring the weight average molecular weight in terms of polystyrene by GPC is Shodex LF-804 (manufactured by Showa Denko K.K.).

The polyisobutylene-based adhesive containing the first polyisobutylene and the second polyisobutylene preferably has a plurality of detection peaks when GPC measurement is performed under the conditions at the time of measurement of the weight average molecular weight.

Since the polyisobutylene-based adhesive constituting the matrix 111 is a mixture of polyisobutylenes having different molecular weights, the physical properties of the polyisobutylene-based adhesive can be adjusted by controlling the mixing ratio. The matrix 111 may contain 35 mass% or more and 85 mass% or less of the first polyisobutylene and 5 mass% or more and 60 mass% or less of the second polyisobutylene with respect to the total mass of the conductive adhesive layer 11.

When the first polyisobutylene is contained in an amount of 35 mass% or more and 85 mass% or less in the polyisobutylene-based adhesive, moderate adhesiveness can be imparted to the polyisobutylene-based adhesive. This makes it possible to suppress positional displacement during assembly of the secondary battery and to facilitate assembly work of the secondary battery. In addition, this makes it possible to suppress unevenness of the reaction by closely following the separation layer even during charging and discharging.

When the polyisobutylene-based adhesive contains 5 mass% or more and 60 mass% or less of the second polyisobutylene, the conductive adhesive layer can be restored in the thickness direction to ensure electrical conductivity when the pressure in the secondary battery temporarily increases and then decreases due to charging and discharging or heat generation of the secondary battery. In addition, since there is an appropriate elastic force even during charging and discharging, it is possible to suppress uneven deposition of dendrites or the like at the time of deposition of lithium metal, and to assist uniform deposition of lithium metal. This effect has an effect of further improving the life and safety of the secondary battery.

### (Conductive material)

The conductive material 112 imparts conductivity to the conductive adhesive layer 11. Examples of the conductive material 112 include at least one selected from carbon black such as acetylene black, carbon fiber, activated carbon, metal powder, carbon nanotube (CNT), conductive polymers, and the like. The conductive material 112 does not need to have activity like an active material, and only has to be any material that improves conductivity inside the electrode.

The conductive adhesive layer 11 may contain 85 mass% or more and 95 mass% or less of the matrix 111 and 5 mass% or more and 15 mass% or less of the conductive material 112 with respect to the total mass of the conductive adhesive layer 11.

The thickness of the conductive adhesive layer 11 is preferably 2 µm or more and 30 µm or less. The thickness of the conductive adhesive layer 11 may be 5 µm or more. The thickness of the conductive adhesive layer 11 may be 25 µm or less. The upper limit value and the lower limit value of the thickness of the conductive adhesive layer 11 can be optionally combined.

### <Current collecting foil>

The current collecting foil 12 is a metal component used to collect current to the terminal of a battery when a current collector formed of the current collecting foil with conductive adhesive layer 10 is used on the anode side of a lithium secondary battery. The material of the current collecting foil 12 may be one selected from the group consisting of copper (Cu), Pt, Ti, Ni, and stainless steel. The material of the current collecting foil 12 is preferably copper or Ni.

The thickness of the current collecting foil 12 is preferably 4 µm or more and 15 µm or less. The thickness of the current collecting foil 12 may be 5 µm or more. The thickness of the current collecting foil 12 may be 10 µm or less. The upper limit value and the lower limit value of the thickness of the current collecting foil 12 can be optionally combined.

A lead member for leading out electricity from the inside of the battery or introducing electricity into the inside of the battery may be electrically connected to the current collecting foil 12. A portion having no conductive adhesive layer may be provided on the current collecting foil 12 to form a lead portion electrically connected to a configuration outside the battery.

Fig. 2 is a schematic view illustrating a secondary battery 100 of the present embodiment. The secondary battery 100 is a lithium secondary battery including an anode current collector 10A made of the above-described current collecting foil with conductive adhesive layer 10, a cathode 20, and a separation layer 30. The secondary battery 100 is an anode-free battery having no anode active material layer.

The anode current collector 10A is a laminate of a conductive adhesive layer 11A and a current collecting foil 12A, and is obtained by cutting the current collecting foil with conductive adhesive layer 10. The anode current collector 10A is attached to the separation layer 30 by the conductive adhesive layer 11A.

The cathode 20 includes a cathode active material layer 21 and a current collector 22. The cathode 20 is laminated with the cathode active material layer 21 facing the separation layer 30.

The cathode active material layer 21 includes a conventional cathode active material for a lithium secondary battery, a binder, and a conductive material.

Examples of the cathode active material include lithium cobalt oxide (LiCoO₂), lithium manganese oxide (LiMn₂O₄), lithium iron phosphate (LiFePO₄), a Ni-Mn-Co ternary (NMC-based) active material (LiNiₓMn_{y}Co_{z}O₂), and a Ni-Co-Al ternary (NCA-based) active material (LiNiₓCo_{y}Al_{z}O₂).

As the binder and the conductive material, a conventional material used for a cathode active material layer for a lithium secondary battery can be adopted. In the case of a cell that does not use an electrolytic solution, a solid electrolyte may be mixed into the cathode active material layer 21. As the solid electrolyte, a conventional solid electrolyte such as a sulfide-based solid electrolyte such as Li₂S-P₂S₅, an oxide-based solid electrolyte, or a polymer electrolyte can be adopted.

The separation layer 30 is a layer disposed between the anode current collector 10A and the cathode 20 to separate the anode current collector 10A and the cathode 20. The separation layer 30 is sandwiched between the conductive adhesive layer 11A of the anode current collector 10A and the cathode 20, and the conductive adhesive layer 11A of the anode current collector 10A is attached thereto.

Examples of the separation layer 30 include a separator disposed between a cathode and an anode in a lithium secondary battery using an electrolytic solution and having ion conductivity, and an electrolyte layer (solid electrolyte membrane) disposed between a cathode and an anode in a lithium secondary battery using a gel-like or solid electrolyte. The electrolytic solution or the electrolyte layer contains an electrolyte containing lithium ions. The separation layer 30 may be composed of a plurality of layers as long as it fulfills functions. The plurality of layers may include a metal layer by metal foil, metal vapor deposition, or the like. Some of the layers may have a current collecting function.

As the configuration of the anode-free battery adopted by the secondary battery 100, a conventional configuration can be appropriately adopted.

The anode current collector 10A can be easily formed by cutting the current collecting foil with conductive adhesive layer 10 which is a raw material. The obtained anode current collector 10A is bonded to the separation layer 30 with the conductive adhesive layer 11A interposed therebetween, so that a laminated structure of the anode current collector 10A and the separation layer 30 can be easily formed. Therefore, by using the anode current collector 10A, the secondary battery 100 which is an anode-free battery can be easily manufactured.

Here, it is presumed that when the secondary battery 100, which is the obtained anode-free battery, is charged, metal lithium is deposited in the vicinity of the interface between the conductive adhesive layer 11A of the anode current collector 10A and the separation layer 30 to form a lithium-deposited layer (not illustrated).

In addition, metal lithium constituting the lithium-deposited layer emits electrons by discharging the secondary battery 100, and is held in the cathode active material layer 21 as lithium ions. As a result, the lithium-deposited layer decreases or dissolves.

In the secondary battery 100 as described above, when the formation and dissolution of the lithium-deposited layer are repeated by charging and discharging, a volume change occurs with the formation and decrease of the lithium-deposited layer. Therefore, the conductive adhesive layer 11A of the anode current collector 10A receives internal stress accompanying the formation and decrease of the lithium-deposited layer.

In addition, in the secondary battery 100, the anode current collector 10A is bonded to the separation layer 30 due to the adhesive force of the conductive adhesive layer 11A. Therefore, when a lithium-deposited layer is deposited on the interface between the conductive adhesive layer 11A and the separation layer 30, the conductive adhesive layer 11A may be peeled off from the separation layer 30.

In order to cope with these changes assumed to occur inside the battery due to charging and discharging, the inventors considered that it is important that the conductive adhesive layer 11A has both (a) moderate softness that allows a volume change accompanying the formation and dissolution of the lithium-deposited layer without excessive deformation, and (b) adhesive force that can maintain adhesion between the conductive adhesive layer 11A and the separation layer 30 even when the lithium-deposited layer is formed.

As a result of intensive studies by the inventors based on the above idea, it has been found that by providing a current collecting foil with conductive adhesive layer having a conductive adhesive layer of the above-described configuration, a suitable current collecting foil with conductive adhesive layer 10 having both the physical properties of the above (a) and (b) can be obtained. That is, it has been found that when the current collecting foil with conductive adhesive layer 10 having the conductive adhesive layer 11 of the above-described configuration is employed in the secondary battery 100, cyclability is easily maintained even when charging and discharging are repeated.

In the present specification, it can be confirmed by evaluating the following (1) and (2) that the current collecting foil with conductive adhesive layer 10 has both the physical properties of the above (a) and (b).

### (1) Protrusion test

In the protrusion test under the following condition 1, extreme protrusion is not confirmed.

### (Condition 1)

A plurality of conductive adhesive layers of the prepared current collecting foil with conductive adhesive layer is stacked to have a thickness of 300 µm, and the laminate of the conductive adhesive layers is sandwiched between the current collecting foil and the release film to prepare a laminate. The obtained laminate is punched into a disk shape having a diameter of 10 mm to prepare a test piece.

The obtained test piece is sandwiched between a pair of 25 µm thick polyester films having optical transparency, a weight is placed on the polyester film, a pressure of 4.5 psi (where 1 psi = 6.89476 kPa) is applied, and the test piece is held for 5 minutes.

The weight is removed, the state is observed through the polyester film in plan view, and the area of the conductive adhesive layer protruding from the current collecting foil constituting the laminate is measured with a microscope. When the evaluation result is any one of the following (i) and (ii), it is regarded as acceptable.
(i) No protrusion of the conductive adhesive layer in plan view.
(ii) The area of the conductive adhesive layer protruding from the current collecting foil is less than 15% of the plan view area of the test piece before the test.

The test pressure of 4.5 psi was set with reference to the restraint pressure of a general in-vehicle battery.

### (2) Peel test

The peel strength calculated in a peel test under the following condition 2 is 1.0 N/mm or more.

### (Condition 2)

The current collecting foil with conductive adhesive layer is cut into strips of 15 mm to prepare three test pieces. The conductive adhesive of the test piece is attached onto a SUS304 plate washed with ethanol. At the time of attaching, a rubber roller of 2 kg is used, and the roller is reciprocated once to apply pressure such that the test piece and the plate are brought into close contact.

Thereafter, in a state where the end of the current collecting foil with conductive adhesive layer was protected with paper, the current collecting foil with conductive adhesive layer was fixed by a sample gripping section of a tensile tester, and peeled off at a peeling rate of 300 mm/min and a peeling angle of 180° by 100 mm to measure the peel strength. The arithmetic average value of the peel strength measured for the three test pieces is adopted as the peel strength (N/mm).

The conductive adhesive layer 11A (conductive adhesive layer 11) satisfying the above (1) becomes an adhesive layer having moderate flexibility without being too soft. Therefore, for example, when the anode current collector produced from the current collecting foil with conductive adhesive layer 10 is adopted in the secondary battery, the anode current collector is not excessively crushed by the stress (for example, the restraint stress when the secondary battery (cell) is assembled) applied to the secondary battery from the outside. Therefore, such a secondary battery easily follows deformation associated with deposition and dissolution of metal lithium during charging and discharging, and can suppress breakage.

The conductive adhesive layer 11A (conductive adhesive layer 11) satisfying the above (2) can suitably maintain adhesion between the conductive adhesive layer 11A and the separation layer 30 even when a lithium-deposited layer is formed.

Here, a configuration in which a resin film referred to as an undercoat layer is formed on a surface of a current collecting foil is known (for example, International publication WO2009/147989). However, the conventional undercoat layer is a layer used as a protective film of a current collecting foil, and does not have adhesive force capable of being bonded to an adjacent layer unlike the conductive adhesive layer 11A (conductive adhesive layer 11). Therefore, it can be said that the conventional undercoat layer does not have a matrix containing a polyisobutylene-based adhesive or an acrylic-based adhesive unlike the conductive adhesive layer 11A (conductive adhesive layer 11) of the present embodiment, and has a completely different configuration that does not satisfy the above (1) and (2).

### [Method for producing current collecting foil with conductive adhesive layer]

The current collecting foil with conductive adhesive layer can be produced by applying a coating material obtained by dissolving or dispersing the material of the conductive adhesive layer in a solvent onto the current collecting foil and removing the solvent.

As the solvent, a solvent that dissolves at least an adhesive resin is used. Examples of the solvent include a hydrocarbon-based solvent, an alcohol-based solvent, an ether-based solvent, a ketone-based solvent, an ester-based solvent, an amide-based solvent, a halogen-based solvent, a sulfur-based solvent, and an inorganic solvent.

Examples of the hydrocarbon-based solvent include heptane, cyclohexane, toluene, and xylene.

Examples of the alcohol-based solvent include methanol and ethanol.

Examples of the ether-based solvent include tetrahydrofuran and dioxane.

Examples of the ketone-based solvent include acetone and methyl ethyl ketone.

Examples of the ester-based solvent include ethyl acetate and ethyl lactate.

Examples of the amide-based solvent include dimethylformamide and N-methyl-2-pyrrolidone.

Examples of the halogen-based solvent include chloroform and dichloromethane.

Examples of the sulfur-based solvent include dimethyl sulfoxide and sulfolane.

An example of the inorganic solvent is water.

As the solvent, only one solvent may be used, or a mixed solvent obtained by mixing two or more solvents may be used.

The method for preparing the coating material is not particularly limited, and it is only required to mix an adhesive, a conductive material, an optionally added additive, and the like one by one or two or more at the same time with a solvent to dissolve or disperse them in the solvent.

The order of addition of the solid content (adhesive, conductive material, optionally added additive) to the solvent is not limited.

After the coating material is prepared, a solvent may be further added to adjust the viscosity of the coating material.

The state of the coating material may be adjusted by a treatment such as defoaming or filtration. Additives such as an antifoaming agent, a viscosity modifier, a thickener, a diluent, a surfactant, and a stabilizer may be added to the coating material. As these additives, commonly used additives can be used.

The method for applying the coating material is not particularly limited, and examples thereof include blade coating, dip coating, spray coating, gravure coating, bar coating, and die coating.

A current collecting foil with conductive adhesive layer can be formed by removing the solvent from the coating film formed by applying the coating material. The solvent can be removed by heating, depressurization, blowing, and a combination thereof.

When a strip-shaped long current collecting foil is used, the current collecting foil with conductive adhesive layer may be wound into a roll, stored, and transported, or may be subjected to sheet processing to form a plurality of sheet-shaped current collecting foils with conductive adhesive layer.

In this way, a current collecting foil with conductive adhesive layer is obtained.

By using the current collecting foil with conductive adhesive layer and the anode current collector configured as described above for producing an anode-free battery (secondary battery), a secondary battery can be easily produced. In addition, the secondary battery having the anode current collector as described above is easy to maintain cyclability even when charged and discharged, and has high reliability.

The preferred embodiment examples according to the present invention have been described above with reference to the accompanying drawings, but the present invention is not limited to such examples. Various shapes, combinations, and the like of the constituent members shown in the above-described examples are merely examples, and various modifications can be made based on design requirements and the like without departing from the gist of the present invention.

### EXAMPLES

Hereinafter, the present invention will be described with reference to Examples, but the present invention is not limited to these Examples.

### (Examples 1 to 7 and Comparative Examples 1 to 4)

The materials used in Examples and Comparative Examples are as follows.

### (Polyisobutylene)

PIB 1: Tetrax 3T (manufactured by ENEOS Materials Corporation, Mw 41,000)
PIB 2: Tetrax 6T (manufactured by ENEOS Materials Corporation, Mw 75,000)
PIB 3: OPPANOL N50 (manufactured by BASF, Mw 1,050,000)
PIB 4: OPPANOL N80 (manufactured by BASF, Mw 3,050,000)
PIB 5: OPPANOL N150 (manufactured by BASF, Mw 565,000)

The weight average molecular weight (Mw) of each polyisobutylene was measured by gel permeation chromatography (GPC) and determined in terms of polystyrene. As the conditions of GPC, the following conditions were adopted.

### (GPC conditions)

Column: Shodex LF-804 (manufactured by Showa Denko K.K.)
Solvent: Chloroform
Temperature: 40°C

PIB 1 and PIB 2 correspond to the first polyisobutylene in the present invention, and PIB 3, PIB 4, and PIB 5 correspond to the second polyisobutylene in the present invention.

### (Conductive material)

Conductive carbon black: C-NERGY SUPER C65T (manufactured by Imerys)

### (Current collecting foil)

### Cu foil

Adhesives were mixed at a ratio shown in the following Table 1 to obtain a material solution. The obtained material solution and the conductive material were mixed at a ratio shown in Table 1 to obtain a coating material state. Furthermore, toluene was added to adjust the viscosity.

The slurry was defoamed and passed through a sieve with a mesh size of 100 µm to obtain the coating material of each of Examples and Comparative Examples.

The obtained coating material was applied to the current collecting foil using an applicator such that the coating thickness after drying was 5 µm. After the application, the resulting product was put in a batch-type dryer for 5 minutes and sufficiently dried to obtain a current collector.

**[Table 1]**

| | PIB | | | | | | Conductive material (mass%) |
|---|---|---|---|---|---|---|---|
| | Type | Mass% | Type | Mass% | Type | Mass% | |
| Example 1 | PIB2 | 70 | PIB4 | 20 | - | - | 10 |
| Example 2 | PIB2 | 85 | PIB4 | 5 | - | - | 10 |
| Example 3 | PIB1 | 80 | PIB3 | 10 | - | - | 10 |
| Example 4 | PIB1 | 45 | PIB3 | 45 | - | - | 10 |
| Example 5 | PIB1 | 35 | PIB3 | 55 | - | - | 10 |
| Example 6 | PIB1 | 76 | PIB3 | 9 | - | - | 15 |
| Example 7 | PIB1 | 78 | PIB3 | 5 | PIB5 | 5 | 12 |
| Comparative Example 1 | PIB1 | 88 | PIB3 | 2 | - | - | 10 |
| Comparative Example 2 | PIB1 | 10 | PIB3 | 80 | - | - | 10 |
| Comparative Example 3 | PIB1 | 71 | PIB3 | 9 | - | - | 20 |
| Comparative Example 4 | PIB1 | 67 | PIB3 | 8 | - | - | 25 |

### (Evaluation 1)

A protrusion level of the obtained conductive adhesive layer was performed by the method described in "(1) Protrusion test" described above. A sample in which protrusion could not be confirmed, or the increase in area of protrusion was less than 15% was regarded as acceptable, and a sample in which the increase in area of protrusion was 15% or more was regarded as unacceptable.

### (Evaluation 2)

A peel strength of the obtained conductive adhesive layer was performed by the method described in "(2) Peel test" described above. A sample having a peel strength of 1.0 N/mm or more was rated as acceptable, and a sample having a peel strength of less than 1.0 N/mm was rated as unacceptable.

The evaluation results are shown in Table 2. A sample in which both of Evaluations 1 and 2 were acceptable was judged as acceptable as a comprehensive evaluation. In Table 2, acceptable is indicated by A, and unacceptable is indicated by B.

**[Table 2]**

| | Evaluation 1 | Evaluation 2 | Comprehensive Evaluation |
|---|---|---|---|
| Example 1 | A | A | A |
| Example 2 | A | A | A |
| Example 3 | A | A | A |
| Example 4 | A | A | A |
| Example 5 | A | A | A |
| Example 6 | A | A | A |
| Example 7 | A | A | A |
| Comparative Example 1 | B | A | B |
| Comparative Example 2 | A | B | B |
| Comparative Example 3 | A | B | B |
| Comparative Example 4 | A | B | B |

As a result of the evaluation, it can be said that the current collecting foil with conductive adhesive layer of each of Examples 1 to 7 has both (a) moderate softness that allows a volume change accompanying the formation and dissolution of the lithium-deposited layer without excessive deformation, and (b) adhesive force that can maintain adhesion between the conductive adhesive layer and the separation layer even when the lithium-deposited layer is formed. In a secondary battery employing a current collecting foil prepared from such a current collecting foil with conductive adhesive layer, it can be expected that cyclability is easily maintained.

On the other hand, Comparative Example 1 was rated as unacceptable in (Evaluation 1). Therefore, the current collecting foil with conductive adhesive layer of Comparative Example 1 can be evaluated as being too soft for the purpose of the invention.

In Comparative Examples 2 to 4, the film was rated as unacceptable in (Evaluation 2). In the current collecting foil with conductive adhesive layer having too low peeling strength in Evaluation 2, it is considered that the conductive adhesive layer cannot follow the separation layer at the time of a volume change due to increase or decrease of lithium during charging and discharging, and nonuniformity of reaction may occur. Therefore, it can be evaluated that the current collecting foil with conductive adhesive layer of each of Comparative Examples 2 to 4 has a possibility of interfacial peeling at the interface between the adhesive layer and the separation layer (separator or solid electrolyte membrane) due to deposition and dissolution of metal lithium associated with charging and discharging, and thus cycle characteristics are hardly maintained.

An anode current collector was produced from each of the current collecting foils with conductive adhesive layer of Examples and Comparative Examples, and cyclability of a secondary battery including the anode current collector was evaluated. As a result, it was confirmed that secondary batteries of Examples exhibited better cyclability than secondary batteries of Comparative Examples. Among them, the anode current collector produced from the current collecting foil with conductive adhesive layer of Example 3 exhibited the best cyclability when employed in the secondary battery.

From the above results, it was found that the present invention is useful.

### DESCRIPTION OF THE REFERENCE NUMERALS

- 10: current collecting foil with conductive adhesive layer
- 10A: anode current collector
- 11, 11A: conductive adhesive layer
- 12, 12A: current collecting foil
- 19: release film
- 20: cathode
- 22: current collector
- 30: separation layer
- 100: secondary battery
- 111: matrix
- 112: conductive material

## Claims

1. A current collecting foil with conductive adhesive layer comprising:
a current collecting foil; and
a conductive adhesive layer provided on one surface of the current collecting foil, wherein
the conductive adhesive layer includes a matrix containing at least a polyisobutylene-based adhesive and a conductive material dispersed in the matrix, and contains 85 mass% or more and 95 mass% or less of the matrix and 5 mass% or more and 15 mass% or less of the conductive material with respect to the total mass of the conductive adhesive layer,
the matrix contains the polyisobutylene-based adhesive,
the polyisobutylene-based adhesive contains first polyisobutylene and second polyisobutylene,
a weight average molecular weight of the first polyisobutylene is 30,000 or more and 200,000 or less,
a weight average molecular weight of the second polyisobutylene is 500,000 or more and 5,000,000 or less, and
35 mass% or more and 85 mass% or less of the first polyisobutylene and 5 mass% or more and 60 mass% or less of the second polyisobutylene are contained with respect to the total mass of the conductive adhesive layer.

2. The current collecting foil with conductive adhesive layer according to claim 1, wherein the conductive adhesive layer has a thickness of 2 µm or more and 30 µm or less.

3. The current collecting foil with conductive adhesive layer according to claim 1 or 2, wherein the current collecting foil has a thickness of 4 µm or more and 15 µm or less.

4. The current collecting foil with conductive adhesive layer according to any one of claims 1 to 3, wherein the material of the current collecting foil is copper or nickel.

5. The current collecting foil with conductive adhesive layer according to any one of claims 1 to 4, wherein a release film is laminated on a surface of the conductive adhesive layer.

6. An anode current collector made of the current collecting foil with conductive adhesive layer according to any one of claims 1 to 5.

7. A secondary battery comprising:
the anode current collector according to claim 6;
a cathode; and
a separation layer sandwiched between the conductive adhesive layer of the anode current collector and the cathode, and attached to the conductive adhesive layer of the anode current collector,
wherein the separation layer is a separator or a solid electrolyte membrane.
